# EUROPÄISCHE PATENTANMELDUNG

(11) **EP 1 170 316 A1**
(43) Veröffentlichungstag der Anmeldung: **09.01.2002**
(21) Anmeldenummer: 01111812.2
(22) Anmeldetag: 16.05.2001
(51) Int. Cl.: C08G 18/80

(54) **Verfahren zur Herstellung von hochreaktiven (semi)kristallinen und amorphen blockierten Polyisocyanaten**

(30) Priorität: 07.07.2000 DE 10033097
(71) Anmelder: Degussa AG, 40474 Düsseldorf (DE)
(72) Erfinder: Wenning, Andreas, Dr., 48301 Nottuln (DE); Weihrauch, Thomas, Dr., 48249 Dülmen (DE)

(57) **Zusammenfassung**

Gegenstand der vorliegenden Erfindung ist ein Verfahren zur lösermittelfreien, kontinuierlichen Herstellung eines Gemisches aus einer (semi)kristallinen und einer amorphen aliphatischen, (cyclo)aliphatischen oder cycloaliphatischen, Triazol- oder Pyrazol-blockierten C₃-C₅₀-Isocyanat-Verbindung durch Umsetzung von
A) einer aliphatischen, (cyclo)aliphatischen und/oder cycloaliphatischen C₃-C₅₀-Diisocyanat-Verbindung
   und
B) einer aliphatischen, (cyclo)aliphatischen und/oder cycloaliphatischen C₃-C₅₀-Polyisocyanat Verbindung mit Isocyanuratgruppen
   mit
C) 1,2,4-Triazol
   und/oder
D) Pyrazolen der Formel 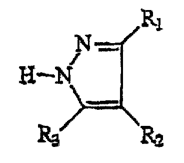
wobei R₁, R₂, und R₃ gleichzeitig oder unabhängig voneinander Wasserstoff oder Alkyl-, Alkenyl-, Aralkyl-, Arylgruppen oder N-substituierte Carbamoylgruppen, Halogen oder -C(=O)-O-R₄ darstellen, wobei R₄ eine C₁-C₁₂ Alkylgruppe bedeutet, in einem Extruder, Intensiv-Mischer, Intensiv-Mischer oder statischen Mischer durch intensive Durchmischung und kurzzeitiger Reaktion bei Wärmezufuhr und nachfolgender Isolierung des Endprodukts durch schnelle Abkühlung.

## Beschreibung

Die Erfindung betrifft ein Verfahren zur Herstellung hochreaktiver Gemische aus (semi)kristallinen und amorphen blockierten Polyisocyanaten.

Aufgrund ihrer Umweltverträglichkeit, Ökonomie und sehr guten Beschichtungseigenschaften verdrängen Pulverlacke konventionelle lösemittelhaltige Lacksysteme immer mehr. Polyurethan (PUR)-Pulverlacke sind für ihre hervorragenden Beschichtungsqualitäten bekannt. Die auf partiell oder total blockierten Polyisocyanaten und Hydroxylgruppen-haltigen Polymeren basierenden PUR-Pulverlacke sind in der Hitze härtbar. Sie sind Stand der Technik und werden in der Literatur vielfach beschrieben. Als Beispiele seien die DE-OSS 21 05 777, 25 42 191, 27 35 497, 28 42 641, 30 04 876, 30 39 824 oder 31 28 743 genannt. Aus der Vielzahl von Blockierungsmitteln, beschrieben in Houben-Weyl, Methoden der organischen Chemie, Band XIV/2, 4. Auflage, Georg Thieme Verlag, Stuttgart, 1963, Seiten 61-70, hat sich für PUR-Pulverlacke ε-Caprolactam durchgesetzt. Allerdings erfordern PUR-Pulverlacke auf Basis ε-Caprolactam-blockierter Polyisocyanate für die Vernetzung der Beschichtung Härtungstemperaturen oberhalb 170 °C.

Um temperaturempfindliche Werkstücke der Pulvertechnologie zugänglich zu machen oder um Energiekosten zu senken, wurden Blockierungsmittel gesucht, die bei niedrigeren Temperaturen als ε-Caprolactam abspalten. Mit Oxim-blockierten Polyisocyanaten können in der Tat PUR-Pulverlacke hergestellt werden, deren Härtungstemperaturen auf niedrigem Niveau liegen. Sie werden z. B. in DE-OS 22 00 342, EP-A 0 432 257, US 3 857 818 beschrieben. Allerdings sind die Thermoinstabilität und die Neigung zur Nadelstichbildung von großem Nachteil.

Pyrazole und Triazole sind ebenfalls als Blockierungsmittel für hochreaktive Polyisocyanate geeignet, ohne jedoch die Nachteile von Oximen aufzuweisen.

So beschreibt die EP 0 159 117 Polyisocyanate, die mit Pyrazolen blockiert sind. Die Reaktion wird diskontinuierlich im Lösemittel durchgeführt. Die Pyrazol-blockierten Polyisocyanate sind als Vernetzer für lösemittelhaltige PUR-Lacke verwendbar, die bei Temperaturen um 120 °C gehärtet werden können. Der Einsatz dieser Polyisocyanate als Pulverlack-Vernetzer wird nicht beschrieben.

Die US 5 804 646 beansprucht einen Pulverlack, der aus einem Hydroxylgruppen-haltigen Polymer und einem Isocyanat-Vernetzer besteht. Der Vernetzer enthält eine Mischung aus einer (semi)kristallinen aliphatischen, (cyclo)aliphatischen oder cycloaliphatischen Triazol-blockierten Isocyanatkomponente und einer amorphen aliphatischen, (cyclo)aliphatischen oder cycloaliphatischen Triazol-blockierten Isocyanatkomponente.

Derartige Triazol-blockierte Polyisocyanate sind als niedrigviskose Vernetzer für außenbeständige Pulverlacke sogar in der qualitativ äußerst anspruchsvollen Automobillackierung geeignet. Die Pulverlack-Zusammensetzung kann bei Temperaturen ab 130 °C gehärtet werden. Die Vernetzer der US 5 804 646 werden lösemittelfrei in einem Batch-Prozess hergestellt. Dieser Prozess ist mit großen Schwierigkeiten verbunden, da der Temperaturbereich sehr klein ist. Einerseits werden hohe Temperaturen ― i. d. R. größer 120 °C - benötigt, damit der während der Herstellung anfallende Feststoff als Schmelze vorliegt und noch aus dem Kessel ausgetragen werden kann. Andererseits darf die Temperatur nicht über 125 °C steigen, da sonst das Blockierungsmittel wieder abgespalten wird.

Die Aufgabe der vorliegenden Erfindung war es, ein weniger aufwendiges, einfaches, kontinuierliches Verfahren zur Herstellung der hochreaktiven Pyrazol- und Triazol-blockierten Polyisocyanate zu finden, das die genannten Nachteile des Stands der Technik nicht aufweist.

Überraschenderweise wurde gefunden, dass die Umsetzung aliphatischer, (cyclo)aliphatischer oder cycloaliphatischer Polyisocyanate mit Pyrazolen oder Triazolen zu einem Gemisch aus amorphen und (semi)kristallinen Vernetzern für PUR-Pulverlacke in Substanz, also lösemittelfrei, und kontinuierlich in einem Extruder, Intensiv-Kneter oder Intensiv-Mischer durchgeführt werden kann, wenn bestimmte Verfahrensbedingungen eingehalten werden.

Gegenstand der vorliegenden Erfindung ist daher ein Verfahren zur lösemittelfreien, kontinuierlichen Herstellung eines Gemisches aus einer (semi)kristallinen und einer amorphen aliphatischen, (cyclo)aliphatischen oder cycloaliphatischen, Triazol- oder Pyrazol-blockierten C₃―C₅₀-Isocyanat-Verbindung durch Umsetzung von
A) einer aliphatischen, (cyclo)aliphatischen und/oder cycloaliphatischen C₃―C₅₀-Diisocyanat- Verbindung und
B) einer aliphatischen, (cyclo)aliphatischen und/oder cycloaliphatischen C₃―C₅₀-Polyisocyanat Verbindung mit Isocyanuratgruppen mit
C) 1,2,4-Triazol und/oder
D) Pyrazolen der Formel 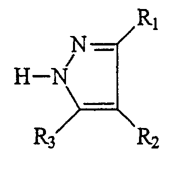
wobei R₁, R₂ und R₃ gleichzeitig oder unabhängig voneinander Wasserstoff oder Alkyl-, Alkenyl-, Aralkyl-, Arylgruppen oder N-substituierte Carbamoylgruppen, Halogen oder ―C(=O)-O-R₄ darstellen, wobei R₄ eine C₁-C₁₂ Alkylgruppe bedeutet, in einem Extruder, Intensiv-Mischer, Intensiv-Mischer oder statischen Mischer durch intensive Durchmischung und kurzzeitiger Reaktion bei Wärmezufuhr und nachfolgender Isolierung des Endprodukts durch schnelle Abkühlung.

Das Prinzip des Verfahrens besteht darin, dass die Umsetzung lösemittelfrei und kontinuierlich in einem Extruder, Intensiv-Kneter, Intensiv-Mischer oder statischen Mischer durch intensive Durchmischung und kurzzeitige Reaktion bei Wärmezufuhr erfolgt. Durch anschließende schnelle Abkühlung gelingt es dann, das Endprodukt zu erhalten.

Als Aggregate sind Extruder wie Ein- oder Mehrschneckenextruder, insbesondere Zweischneckenextruder oder Planetwalzenextruder, Intensiv-Kneter, Intensiv-Mischer wie Thorax-Mischer, oder statische Mischer für das erfindungsgemäße Verfahren besonders geeignet und werden bevorzugt verwendet.

Überraschend war es, dass die Umsetzung, die im diskontinuierlichen Verfahren mehrere Stunden benötigt, in den genannten Aggregaten in einigen Sekunden vollständig abläuft. Nach dem Stand der Technik gelingt es nicht, ein einfach weiter verarbeitbares Produkt zu erhalten. Das Reaktionsprodukt kristallisiert im Reaktor schnell aus und lässt sich anschließend nur schwer, mechanisch aus dem System entfernen. Von prinzipieller Natur ist die Tatsache, dass kurzzeitige thermische Belastung im Zusammenspiel mit der Mischwirkung ausreicht, um die Reaktionspartner vollständig oder weitestgehendst umzusetzen. Die Aggregate ermöglichen durch geeignete Bestückung der Mischkammern bzw. Zusammenstellung der Schneckengeometrien intensive rasche Durchmischung bei gleichzeitigem intensiven Wärmeaustausch. Andererseits ist auch eine gleichmäßige Durchströmung in Längsrichtung mit möglichst einheitlicher Verweilzeit gewährleistet. Außerdem muss eine unterschiedliche Temperierung in den einzelnen Gerätegehäusen- oder Abschnitten möglich sein.

Die Umsetzungsprodukte werden den Aggregaten in der Regel in getrennten Produktströmen zudosiert, bei mehr als zwei Produktströmen können diese auch gebündelt zugeführt werden. Pyrazole oder 1,2,4-Triazol bzw. Mischungen dieser Blockierungsmittel und/oder Katalysatoren und/oder Zuschlagstoffe, wie Verlaufsmittel und Stabilisatoren, können zu einem Produktstrom zusammengefasst werden; ebenso aliphatische, (cyclo)aliphatische oder cycloaliphatische Diisocyanate, Mischungen von diesen Diisocyanaten sowie Zuschlagstoffe und Katalysatoren. Die Stoffströme können auch geteilt werden und so in unterschiedlichen Anteilen an verschiedenen Stellen den Aggregaten zugeführt werden. Auf diese Weise werden gezielt Konzentrationsgradienten eingestellt, was die Vollständigkeit der Reaktion herbeiführen kann. Die Eintrittsstelle der Produktströme in der Reihenfolge kann variabel und zeitlich versetzt gehandhabt werden.

Die Reaktion kann durch Katalysatoren wie z. B. Zinn-Verbindungen beschleunigt werden. Ein geeigneter Katalysator ist z. B. Dibutylzinndilaurat. Die Konzentration der Katalysatoren beträgt 0,01 bis 5 %, bevorzugt 0,01 bis 3 %, bezogen auf die Gesamtrezeptur.

Die der schnellen Reaktion nachgeschaltete Abkühlung kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung wird je nach Viskosität des die Aggregate oder die Nachreaktionszone verlassenden Produkts zunächst durch weitere Abkühlung mittels entsprechender vorgenannter Gerätschaften auf eine geeignete Temperatur gebracht. Dann erfolgt die Pastillierung oder aber eine Zerkleinerung in eine gewünschte Partikelgröße mittels Walzenbrecher, Stiftmühle, Hammermühle, Schuppwalzen oder Ähnlichem.

Die erfindungsgemäßen Gemische aus (semi)kristallinen und amorphen Isocyanat-Verbindungen werden aus aliphatischen, (cyclo)aliphatischen oder cycloaliphatischen Diisocyanaten und/oder deren Isocyanurate (Trimere) hergestellt. Beispiele sind 1,6-Hexamethylendiisocyanat (HDI), 2,2,4-Trimethylhexamethylendiisocyanat (TMDI), 2,4,4-Trimethylhexamethylendiisocyanat (TMDI), Isophorondiisocyanat (IPDI), 1,1-Methylen-bis-4-isocyanatocyclohexan (H₁₂MDI) oder 1,3-Bis(1-isocyanato-1-methylethyl)benzen (TMXDI) bzw. die entsprechenden Isocyanurate daraus. Das Äquivalent-Verhältnis in Bezug auf die blockierten Isocyanatgruppen zwischen der (semi)kristallinen Komponente A) und der amorphen Komponente B) liegt zwischen 8:2 und 2:8. Die Mischung ist bei Raumtemperatur fest. Der Schmelzpunkt des Vernetzers liegt zwischen 50 und 130 °C.

Als Blockierungsmittel werden 1,2,4-Triazol oder Pyrazole wie 3,5-Dimethylpyrazol, 3-Methylpyrazol, 4-Nitro-3,5-dimethylpyrazol oder 4-Brom-3,5-dimethylpyrazol eingesetzt.

Die Reaktion zwischen den Polyisocyanaten und den Blockierungsmitteln kann durch Katalysatoren wie z. B. Zinn-Verbindungen beschleunigt werden. Ein geeigneter Katalysator ist z. B. Dibutylzinndilaurat. Die Konzentration der Katalysatoren beträgt 0,01 bis 5 %, bevorzugt 0,01 bis 3 %, bezogen auf die Gesamtrezeptur.

Gemäß dem erfindungsgemäßen Verfahren werden bevorzugt Gemische aus 1,2,4-Triazol- oder 3,5-Dimetzylpyrazol-blockiertes 1,6-Hexamethylendiisocyanat-Trimer als amorphe Komponente und 1,2,4-Triazol- oder 3,5-Dimethylpyrazol-blockiertes 1,6-Hexamethylendiisocyanat als kristalline Komponente hergestellt.

Die erfindungsgemäß hergestellten Gemische sind als Vernetzer für hochreaktive PUR-Pulverlacke geeignet.

Zur Herstellung von PUR-Pulverlacken werden die Gemische mit Hydroxylgruppen enthaltenden Polymeren und Additiven und Zuschlagstoffen formuliert.

Die Hydroxylgruppen enthaltenden Polymere sind grundsätzlich mittelmolekulare Polymere, wie z. B. Epoxidharze, Hydroxyacrylate oder Polyesterpolyole. Bevorzugt werden jedoch Hydroxylgruppen-haltige Polyester und hydroxylierte Acrylatharze.

Die Hydroxylgruppen-haltigen Polyester besitzen eine OH-Funktionalität von > 2, ein zahlenmittleres Molgewicht von 1800 ― 5000, eine OH-Zahl von 20 ― 200 mg KOH/g, eine Viskosität von < 60 000 mPa·s und einen Schmelzpunkt von 70 bis 120 °C. Derartige Hydroxylgruppen-haltige Polyester, wie sie in bekannter Weise durch Kondensation von Polyolen und Polycarbonsäuren hergestellt werden, sind z. B. in den DE-OSS 27 35 497 und 30 04 903 beschrieben.

Die Hydroxyacrylate haben eine OH-Zahl von 20 ― 150 mg KOH/g. Ihre Herstellung wird z. B. in den DE-OSS 30 30 539 und 197 30 669 beschrieben.

Zur Herstellung der gebrauchsfertigen Pulverlacke werden die Gemische, das mittelmolekulare Hydroxylgruppen-haltige Polymer, gegebenenfalls mit Pigmenten, wie z. B. TiO2, und weiteren für Pulverlacke üblichen Zuschlag- oder Hilfsstoffen, wie z. B. Verlaufmittel, z. B. Polybutylacrylat oder Entgasungsmittel, z. B. Benzoin oder Katalysatoren, z. B. Dibutylzinndilaurat (DBTL) auf Extrudern oder Knetern bei Temperaturen zwischen 80 - 140 °C so gemischt, dass das Verhältnis der OH-Gruppen des Hydroxylgruppen-haltigen Polymeren zu den intern blockierten NCO-Gruppen des Vernetzers 0,6 bis 1,2 beträgt.

Die so hergestellten Pulverlacke können nach den üblichen Pulverauftragsverfahren, wie z. B. elektrostatisches Pulversprühen oder Wirbelsintern, auf die zu überziehenden Formteile aufgebracht werden. Die Härtung der Überzüge erfolgt durch Erhitzen auf Temperaturen von 130 - 240 °C.

Nachfolgend wird der Gegenstand der Erfindung anhand von Beispielen erläutert.

### Beispiele

Herstellung der Gemische gemäß dem erfindungsgemäßen Verfahren

### 1.1 Allgemeine Verfahrensvorschrift

In die Einzugsgehäuse eines Doppelschneckenextruders wird das Polyisocyanat bzw. die Mischung verschiedener Polyisocyanate bei einer Temperatur von 20 bis 200 °C eingespeist. Das Blockierungsmittel (Triazol oder Pyrazol) bzw. die Mischung dieser Blockierungsmittel wird mit einer Temperatur von 20 bis 200 °C zudosiert.

Einer der beiden Stoffströme kann gegebenenfalls den Katalysator (z. B. Dibutylzinndilaurat) gelöst enthalten. Einer von beiden Stoffströmen kann bei Bedarf (zu geringer Umsatz) aufgesplittet werden. Die Zudosierung dieses Stromes erfolgt dann in der Weise, dass die Hauptmenge (über 50 %) in die Einzugsgehäuse dosiert wird, während der kleinere Strom in eines der folgenden Gehäuse eingespeist wurde, um so eine Nachreaktion zu ermöglichen.

Der eingesetzte Extruder setzt sich aus verschiedenen Gehäusen zusammen, wobei üblicherweise mindestens die Hälfte thermisch gesteuert werden kann.

Bei einem Extruder mit 4 Gehäusen (G1 bis G4) werden die Temperaturen wie folgt eingestellt:
G1: 20 ― 220 °C, G2 bis G4: 80 ― 220 °C. Wird ein Eduktstrom geteilt, wird die Temperatur der zweiten Einspeisstelle genauso oder ähnlich wie in G1 gewählt.

Alle Temperaturen stellen Soll-Temperaturen dar; die Temperatureinstellung in den Knetergehäusen erfolgt durch elektrische Heizung und Wasser- oder Luftkühlung (pneumatisch).

Die Drehzahl der Doppelschnecke, die auf der Gesamtlänge aus Förder- und Knetelementen aufgebaut ist, beträgt 10 bis 380 Upm.
Das Verhältnis der Isocyanat-Gruppen zu den Amino-Gruppen beträgt 1 : 0,5 bis 1 : 1,5, bevorzugt 1 : 0,8 bis 1 : 1,2.

Das Reaktionsprodukt wird entweder abgekühlt, anschließend zerkleinert oder formiert und abgefüllt.

### 1.2 Beispiel Gemischherstellung

Umsetzungsprodukt von HDI, dem HDI-Trimer und 1,2,4-Triazol.

Das Verhältnis von NCO-Gruppen zu NH-Gruppen beträgt 1 : 1. Es wird ohne Katalysator gearbeitet.

Der Stoffstrom 1 besteht aus der Mischung von 55 Gew.-% TOLONATE HDT (HDI-Isocyanurat von Rhone-Poulenc) und 14 Gew.-% Hexamethylendiisocyanat (bezogen auf 100 % des Gesamtansatzes). Der Stoffstrom 2 besteht aus 31 Gew.-% 1,2,4-Triazol. Die Stoffströme werden nicht geteilt. Der Stoffstrom 2 wird als Feststoff in das erste Gehäuse eines Zweischneckenextruders dosiert. Der Stoffstrom 1 folgt zwei Gehäuse später. Das entstehende Produkt wird auf ein Kühlband aufgebracht.

Die Verweilzeit im Extruder liegt im Bereich von unter einer Minute bis wenigen Minuten.

### Analytische Kennzahlen:

| | |
|---|---|
| Freies NCO (nach ¹³C-NMR) | < 0,5 Gew.-% |
| Gesamt NCO (nasschemisch) | 19,1 Gew.-% |
| Schmelzpunkt | 100― 110 °C |

### 1.3 Vergleich mit einer nach dem Stand der Technik (diskontinuierliches Verfahren) hergestellten Verbindung

### Analytische Kennzahlen:

| | |
|---|---|
| Freies NCO (nach 13C-NMR) | < 0,5 Gew.-% |
| Gesamt NCO (nasschemisch) | 17,9 Gew.-% |
| Schmelzpunkt | 105 ― 108 °C |

### 2. Anwendungsbeispiele

### 2.1 Eingesetztes Hydroxylgruppen-haltiges Polymer

Als Hydroxylgruppen-haltiges Polymer wurden der Polyester URALAC P 1580 (Hydroxylzahl 79 mg KOH/g, DSM) und der Polyester CRYLCOAT 690 (Hydroxylzahl 29 mg KOH/g, UCB) eingesetzt.

### 2.2 Pulverlacke

### Allgemeine Herstellungsvorschrift

Die zerkleinerten Produkte, d. h. Hydroxylgruppen-haltiger Polyester, Triazolblockierter Polyisocyanat-Vernetzer, Verlaufmittel, ggf. Katalysatoren, werden in einem Kollergang innig vermischt und anschließend in einem Zweischneckenextruder der Fa. Berstorff bis maximal 140 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 130 und 240 °C eingebrannt.

### Die Abkürzungen in den folgenden Tabellen bedeuten:

| | | |
|---|---|---|
| SD = | Schichtdicke in µm | |
| ET = | Tiefung nach Erichsen | (DIN 53 156) |
| GS = | Gitterschnittprüfung | (DIN 53 151) |
| KS = | Kugelschlag in inch•lb | (DIN EN-ISO 6272) |

**Tabelle 1:**

| Pulverklarlacke | | | | |
|---|---|---|---|---|
| Beispiel | 1 | 2 Vergleich | 3 | 4 Vergleich |
| Rezeptur | | | | |
| URALAC P 1580 | 74,0 | 74,44 | - | - |
| CRYLCOAT 690 | - | - | 87,19 | 88,08 |
| Verbindung aus 1.2 | 24,9 | - | 11,56 | - |
| Verbindung aus 1.3 | - | 24,31 | - | 10,67 |
| Bemerkungen: | 1,0 Gew.-% Resiflow PV 88, 0,25 Gew.-% Benzoin | | | |

| Lack-Daten | | | | |
|---|---|---|---|---|
| SD | 47-54 | 75-84 | 88-92 | 81-93 |
| GS | 0 | 0 | 0 | 0 |
| ET | > 10 | > 10 | > 10 | 8,5 |
| Impact | > 160 | 70 | 120 | 100 |
| Härtung: | 160 °C/30 Minuten | | | |

## Patentansprüche

1. Verfahren zur lösemittelfreien, kontinuierlichen Herstellung eines Gemisches aus einer (semi)kristallinen und einer amorphen aliphatischen, (cyclo)aliphatischen oder cycloaliphatischen Triazol- oder Pyrazol-blockierten C₃―C₅₀-Isocyanat-Verbindung durch Umsetzung von
A) einer aliphatischen, (cyclo)aliphatischen und/oder cycloaliphatischen C₃-C₅₀-Diisocyanat-Verbindung und
B) einer aliphatischen, (cyclo)aliphatischen und/oder cycloaliphatischen C₃-C₅₀-Polyisocyanat-Verbindung mit Isocyanuratgruppen mit
C) 1,2,4-Triazol und/oder
D) Pyrazolen der Formel 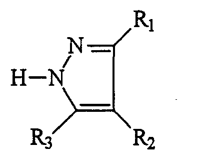
wobei R₁, R₂ und R₃ gleichzeitig oder unabhängig voneinander Wasserstoff oder Alkyl-, Alkenyl-, Aralkyl-, Arylgruppen oder N-substituierte Carbamoylgruppen, Halogen oder ―C(=O)-O-R₄ darstellen und wobei R₄ eine C₁-C₁₂-Alkylgruppe bedeutet,
in einem Extruder, Intensiv-Kneter, Intensiv-Mischer oder statischen Mischer durch intensive Durchmischung und kurzzeitiger Reaktion bei Wärmezufuhr und nachfolgender Isolierung des Endprodukts durch schnelle Abkühlung.

2. Verfahren nach Anspruch 1,
**dadurch gekennzeichnet,**
**dass** als aliphatische, (cyclo)aliphatische oder cycloaliphatische C₃―C₅₀-Diisocyanat-Verbindung A) 1,6-Hexamethylendiisocyanat (HDI), 2,2,4-Trimethylhexamethylendiisocyanat (TMDI), 2,4,4-Trimethylhexamethylendiisocyanat (TMDI), Isophorondiisocyanat (IPDI), 1,1-Methylen-bis-4-isocyanatocyclohexan (H₁₂MDI) und/oder 1,3-Bis(1-isocyanato-1-methylethyl)benzen (TMXDI) eingesetzt werden.

3. Verfahren nach Anspruch 1 oder 2,
**dadurch gekennzeichnet,**
**dass** als aliphatische, (cyclo)aliphatische oder cycloaliphatische C₃―C₅₀-Polyisocyanat-Verbindung B) die Isocyanurate von 1,6-Hexamethylendiisocyanat (HDI), 2,2,4-Trimethylhexamethylendiisocyanat (TMDI), 2,4,4-Trimethylhexamethylendiisocyanat (TMDI), Isophorondiisocyanat (IPDI), 1,1-Methylen-bis-4-isocyanatocyclohexan (H₁₂MDI) und/oder 1,3-Bis(1-isocyanato-1-methylethyl)benzen (TMXDI) eingesetzt werden.

4. Verfahren nach den Ansprüchen 1 bis 3,
**dadurch gekennzeichnet,**
**dass** das Äquivalent-Verhältnis zwischen der kristallinen Isocyanat-Verbindung und der amorphen Isocyanat-Verbindung, bezogen auf die blockierten Isocyanatgruppen, zwischen 8:2 und 2:8 liegt.

5. Verfahren nach den Ansprüchen 1 bis 4,
**dadurch gekennzeichnet,**
**dass** als Pyrazole 3,5-Dimethylpyrazol, 3-Methylpyrazol, 4-Nitro-3,5-dimethylpyrazol und/oder 4-Brom-3,5-dimethylpyrazol eingesetzt werden.

6. Verfahren nach den Ansprüchen 1 bis 5,
**dadurch gekennzeichnet,**
**dass** die Reaktion im Ein-, Zwei- oder Mehrschneckenextruder oder Planetwalzenextruder erfolgt.

7. Verfahren nach Anspruch 6,
**dadurch gekennzeichnet,**
**dass** die Reaktion in einem Zweischneckenextruder erfolgt.

8. Verfahren nach den Ansprüchen 1 bis 5,
**dadurch gekennzeichnet,**
**dass** die Reaktion in einem Intensiv-Mischer erfolgt.

9. Verfahren nach den Ansprüchen 1 bis 5,
**dadurch gekennzeichnet,**
**dass** die Reaktion in einem statischen Mischer erfolgt.

10. Verfahren nach den Ansprüchen 1 bis 9,
**dadurch gekennzeichnet,**
**dass** die Reaktion in einem Extruder, Intensiv-Kneter, Intensiv-Mischer oder statischen Mischer mit mehreren gleichen oder verschiedenen Gehäusen, die unabhängig voneinander thermisch gesteuert werden können, erfolgt.

11. Verfahren nach den Ansprüchen 1 bis 10,
**dadurch gekennzeichnet,**
**dass** die Temperatur im Extruder, Intensiv-Kneter, Intensiv-Mischer oder statischen Mischer 10 bis 250 °C beträgt.

12. Verfahren nach Anspruch 11,
**dadurch gekennzeichnet,**
**dass** die Temperatur 10 bis 190 °C beträgt.

13. Verfahren nach den Ansprüchen 1 bis 12,
**dadurch gekennzeichnet,**
**dass** der Extruder oder Intensiv-Kneter durch geeignete Bestückung der Mischkammern und Zusammenstellung der Schneckengeometrie einerseits zu einer intensiven raschen Durchmischung und schnellen Reaktion bei gleichzeitigem intensiven Wärmeaustausch führen, und andererseits eine gleichmäßige Durchströmung in Längsrichtung mit möglichst einheitlicher Verweilzeit bewirken.

14. Verfahren nach den Ansprüchen 1 bis 13,
**dadurch gekennzeichnet,**
**dass** die Reaktion in Gegenwart von Katalysatoren und/oder Zuschlagstoffen erfolgt.

15. Verfahren nach den Ansprüchen 1 bis 14,
**dadurch gekennzeichnet,**
**dass** die Einsatzstoffe und/oder Katalysator und/oder Zuschlagstoffe gemeinsam oder in getrennten Produktströmen dem Extruder, Intensiv-Kneter, Intensiv-Mischer oder statischen Mischer zugeführt werden.

16. Verfahren nach Anspruch 15,
**dadurch gekennzeichnet,**
**dass** die Zuschlagstoffe gemeinsam mit den Einsatzstoffen zu einem Produktstrom zusammengefasst werden.

17. Verfahren nach den Ansprüchen 1 bis 16,
**dadurch gekennzeichnet,**
**dass** bei mehr als zwei Produktströmen diese gebündelt zugeführt werden.

18. Verfahren nach den Ansprüchen 1 bis 17,
**dadurch gekennzeichnet,**
**dass** ein- oder beide Produktströme geteilt werden.

19. Verfahren nach den Ansprüchen 1 bis 18,
**dadurch gekennzeichnet,**
**dass** der Katalysator mit einem der Stoffströme zusammengefasst wird oder in einem der Ströme gelöst vorliegt.

20. Verfahren nach den Ansprüchen 1 bis 19,
**dadurch gekennzeichnet,**
**dass** die Eintrittsstelle der Produktströme in der Reihenfolge variabel und zeitlich versetzt gehandhabt wird.

21. Verfahren nach den Ansprüchen 1 bis 20,
**dadurch gekennzeichnet,**
**dass** eine Nachreaktion angefügt wird.

22. Verfahren nach den Ansprüchen 1 bis 21,
**dadurch gekennzeichnet,**
**dass** die Konfektionierung je nach Viskosität des den Extruder, Intensiv-Kneter, Intensiv-Mischer oder statischen Mischer und/oder die Nachreaktionszone verlassenden Produktes zunächst durch weitere Abkühlung auf eine zur späteren Abfüllung/Silierung hinreichende Temperatur eingeleitet wird.

23. Verwendung der nach den Ansprüchen 1 bis 22 hergestellten Gemische als Vernetzer für Polymere in lösemittelhaltigen Lacken, wäßrigen Emulsionen oder Dispersionen und Pulverlacken.
